# EUROPEAN PATENT APPLICATION

(11) **EP 4 691 419 A1**
(43) Date of publication of application: **11.02.2026**
(21) Application number: 23931035.2
(22) Date of filing: 27.07.2023
(51) Int. Cl.: A61C 19/05, A61C 9/00, A61C 13/00

(54) **INTER-JAW RELATIONSHIP RECORDING DEVICE FOR MANUFACTURING DIGITAL DENTURE**

(30) Priority: 24.03.2023 KR 20230038485; 18.07.2023 KR 20230092854
(71) Applicant: Pnuadd Co., Ltd., Busan 46215 (KR)
(72) Inventor: HUH, Jung Bo, Yangsan-si, Gyeongsangnam-do 50607 (KR); KWAK, Hyun Ju, Yangsan-si, Gyeongsangnam-do 50607 (KR); LEE, Jong Ho, Busan 48102 (KR)
(74) Representative: AWA Sweden AB
(86) International application number: PCT/KR2023/010935
(87) International publication number: WO 2024/204925

(57) **Abstract**

Disclosed is a jaw relation recording apparatus for manufacturing a digital denture, wherein the apparatus can determine an esthetic position of an anterior tooth part by using a facial scanner, as soon as completing acquisition of a jaw relation required for denture manufacture at the time of a patient' s first visit to a hospital, and can provide an accurately manufactured denture on the same day or at the time of second visit to the hospital. A jaw relation recording apparatus for manufacturing a digital denture according to an aspect of the present invention may include: an upper jaw plate having an impression material provided on an upper surface thereof so as to be able to acquire an impression of upper jaw gums; a lower jaw plate having an impression material provided on a lower surface thereof so as to be able to acquire an impression of lower jaw gums; and an anterior guide member which can be detachably coupled to a front end of the upper jaw plate, enables a lip index relation to be acquired after being coupled to the front end, and enables an esthetic position of anterior teeth to be reproduced through a facial scanner in a state of being coupled to the front end.

## Description

### TECHNICAL FIELD

The present invention relates to a jaw relation recording apparatus for manufacturing a digital denture, which can reduce the number of patient visits, and more particularly, to a jaw relation recording apparatus for manufacturing a digital denture that is capable of completing acquisition of a jaw relation required for denture manufacture at the time of a patient' s first visit, while simultaneously determining an esthetic position of anterior teeth using a facial scanner, thereby enabling an accurate denture to be manufactured and provided on the same day or at the time of a second visit.

### BACKGROUND

In general, a denture, also referred to as a dental prosthesis, is an intraoral implant that artificially restores appearance and function by replacing missing natural teeth.

When the loss of natural teeth is left untreated, deformation of the facial shape may occur due to distortion of the dentition of adjacent and opposing teeth of the missing tooth, and masticatory function is deteriorated, thereby causing further inconvenience in daily life. Moreover, when the state of tooth loss continues for a long period of time, the alveolar bone surrounding the missing teeth is resorbed into the body, resulting in difficulty in placing an artificial periodontal tissue.

Accordingly, the denture is provided to restore masticatory function and prevent deformation of periodontal tissues, and may be classified into a partial denture or a complete denture depending on the number of missing teeth, and may be further classified into a fixed type or a removable type depending on the method of fixation. In this case, the partial denture is installed in a partially edentulous region of the upper jaw or lower jaw by utilizing remaining tissues such as adjacent teeth, alveolar bone between the adjacent teeth, and gums, while the complete denture is installed so as to completely cover the gums in a fully edentulous region of the upper jaw or lower jaw.

Here, the denture includes an artificial gingiva part that surrounds and is fixed to the gums of a target dentition, and an artificial tooth part that replaces missing teeth, and may be individually manufactured in correspondence with different tooth arrangements, shapes, and occlusal heights of respective subjects.

According to the related art, denture fabrication is performed as follows.

On the first dental visit, an impression is taken for producing a preliminary model, and based on this information, a dental laboratory fabricates the preliminary model and a custom tray.

On the second dental visit, border molding and final impression taking are performed. Based on this, the dental laboratory produces a working model and a record base with wax rim.

On the third dental visit, facebow transfer and jaw relation recording are carried out. At this time, the jaw relation information acquired includes determination of anterior tooth length, determination of vertical dimension, recording of horizontal jaw relation, and facebow transfer information. Based on this, the dental laboratory arranges artificial teeth.

On the fourth dental visit, try-in of the wax denture is performed. At this time, lip support, the midline, and the jaw relation are confirmed.

Finally, on the fifth dental visit, the denture is placed and adjusted.

However, according to the related art, although it may vary depending on the skill of the practitioner and the dental laboratory, even with various devices and digital systems for impression taking in place, most patients are required to make more than five dental visits, thereby causing increased inconvenience and burden to the patients.

### DISCLOSURE

### TECHNICAL PROBLEM

The present invention is to solve the above problems, and the present invention is directed to providing a jaw relation recording apparatus for manufacturing a digital denture, which can be applied to an edentulous patient in the whole dentition or a partial dentition and reduces the number of dental visits of the patient by allowing the jaw relation recording apparatus to be applied simultaneously with acquisition of an impression of the patient.

The present invention is also directed to providing a jaw relation recording apparatus for manufacturing a digital denture, which enables vertical dimension recording, centric relation recording, occlusal plane recording, and incisal position recording of anterior teeth to all be carried out at a first dental visit of the patient.

The problems of the present invention are not limited to those mentioned above, and other problems not mentioned will be clearly understood by those of ordinary skill in the art from the following description.

### TECHNICAL SOLUTION

According to an aspect of the present invention, provided is a jaw relation recording apparatus for manufacturing a digital denture, comprising an upper jaw plate having impression material provided on an upper surface of the upper jaw plate to acquire an impression of upper jaw gums; a lower jaw plate having impression material provided on a lower surface of the lower jaw plate to acquire an impression of lower jaw gums; and an anterior handle configured to acquire an incisal position of upper anterior teeth by adjusting a height of the anterior handle so that an upper lip comes into contact with one side of a front end portion of the upper jaw plate.

In this case, the anterior handle may be partially inserted into a coupling groove disposed at a front end portion of the upper jaw plate, and then be fixed after its height is adjusted.

In this case, the anterior handle may include an insertion part inserted in a vertical direction into the coupling groove formed in the upper jaw plate and configured such that its height is adjustable, and fixed; an extension part having one end fixed to the insertion part and the other end extending horizontally, the extension part being brought into contact with an upper lip during a procedure; and a grip part extending from the other end of the extension part.

In this case, a horizontal bar for recording an occlusal plane may be configured to be detachably and rotatably assembled to one side of the upper jaw plate.

In this case, a handle protruding forward may be provided at a front end of the upper jaw plate, and the handle may be provided with a spherical groove configured to receive a rotary sphere provided at a center of the horizontal bar.

In this case, the handle of the upper jaw plate may be disposed at a position lower than a body of the upper jaw plate.

In this case, the upper jaw plate or the lower jaw plate may be formed as a planar semicircular panel corresponding to the upper jaw or the lower jaw, and partition walls may be formed along tooth positions, the upper jaw plate or the lower jaw plate being configured such that the impression material is provided and seated.

In this case, the lower jaw plate may be formed in a panel shape, and a first cutout may be formed at a posterior portion where molars are located so as to avoid gingival interference during mandibular movement and to allow the impression material to be compacted by finger pressure.

In this case, a second cutout may be formed at a central rear portion of the lower jaw plate so as to avoid interference with the tongue and to allow the tongue to be moved backward and positioned, thereby enabling the patient to easily close the mouth in a centric relation.

In this case, a surface of the upper jaw plate or the lower jaw plate on which the impression material is provided may be provided with a seating groove or a projection, and be configured such that the impression material is seated in the same position during reassembly.

In this case, the jaw relation recording apparatus may further include a vertical dimension recording screw screw-coupled through one side of the lower jaw plate so as to record a vertical dimension between the upper jaw plate and the lower jaw plate.

According to another aspect of the present invention, provided is a jaw relation recording apparatus for manufacturing a digital denture, comprising an upper jaw plate having impression material provided on an upper surface of the upper jaw plate to acquire an impression of upper jaw gums; a lower jaw plate having impression material provided on a lower surface of the lower jaw plate to acquire an impression of lower jaw gums; and an anterior guide member detachably coupled to a front end portion of the upper jaw plate, the anterior guide member being capable of acquiring a lip index relation after being coupled and of reproducing an esthetic position of anterior teeth through a facial scanner in a coupled state.

In this case, the anterior guide member may be formed in the form of six maxillary anterior teeth.

In this case, the anterior guide member may be detachably mounted at a front end portion of the upper jaw plate and be configured to be adjustable in height in a vertical direction with respect to the upper jaw plate.

In this case, the anterior guide member may be slidable with respect to the upper jaw plate, an insertion part being formed in the anterior guide member and a groove part into which the insertion part is slidable being formed in the upper jaw plate, or vice versa.

In this case, the jaw relation recording apparatus may further include an occlusal plane recording device connection member that is detachably coupled to a front end portion of the upper jaw plate instead of the anterior guide member, and be configured to have an occlusal plane recording device fastened thereto.

In this case, the occlusal plane recording device connection member may be formed with a spherical groove in which a rotary sphere of the occlusal plane recording device is received.

In this case, the upper jaw plate or the lower jaw plate may be formed with a hole or a groove into which impression material flows so as to increase bonding strength.

In this case, the upper jaw plate or the lower jaw plate may be formed as a planar semicircular panel corresponding to the upper jaw or the lower jaw, and partition walls may be formed along tooth positions, the upper jaw plate or the lower jaw plate being configured such that the impression material is provided and seated.

In this case, the lower jaw plate may be formed in a panel shape, and a first cutout may be formed at a posterior portion where molars are located so as to avoid gingival interference during mandibular movement and to allow the impression material to be compacted by finger pressure.

In this case, a second cutout may be formed at a central rear portion of the lower jaw plate so as to avoid interference with the tongue and to allow the tongue to be moved backward and positioned, thereby enabling the patient to easily close the mouth in a centric relation.

In this case, a surface of the upper jaw plate or the lower jaw plate on which the impression material is provided may be provided with a seating groove or a projection, and be configured such that the impression material is seated in the same position during reassembly.

In this case, the jaw relation recording apparatus may further include a vertical dimension recording screw screw-coupled through one side of the lower jaw plate so as to record a vertical dimension between the upper jaw plate and the lower jaw plate.

### ADVANTAGEOUS EFFECT

According to the above configuration, the jaw relation recording apparatus for manufacturing a digital denture according to an embodiment of the present invention provides an effect of significantly reducing the number of dental visits of the patient, since vertical dimension recording, centric relation recording, occlusal plane recording, and incisal position recording of anterior teeth can all be carried out on a first dental visit, and a denture can then be fabricated on this basis and placed and adjusted on the same day or the following day.

Advantageous effects of the present invention are not limited to the above-described effects, and should be understood to include all effects that can be inferred from the configuration of the invention described in the detailed description or claims of the present invention.

### BRIEF DESCRIPTION OF THE DRAWINGS

FIG. 1 is a perspective view of an upper side of an upper jaw plate, which is a component of a jaw relation recording apparatus for manufacturing a digital denture according to a first embodiment of the present invention.
FIG. 2 is a perspective view of a lower side of the upper jaw plate, which is a component of the jaw relation recording apparatus for manufacturing a digital denture according to the first embodiment of the present invention.
FIG. 3 is a plan view of the upper jaw plate, which is a component of the jaw relation recording apparatus for manufacturing a digital denture according to the first embodiment of the present invention.
FIG. 4 is a right side view of the upper jaw plate with an anterior handle mounted thereto, which is a component of the jaw relation recording apparatus for manufacturing a digital denture according to the first embodiment of the present invention.
FIG. 5 is a front view of the upper jaw plate, which is a component of the jaw relation recording apparatus for manufacturing a digital denture according to the first embodiment of the present invention.
FIG. 6 is a front view of the upper jaw plate with a horizontal bar for occlusal plane recording coupled thereto, which is a component of the jaw relation recording apparatus for manufacturing a digital denture according to the first embodiment of the present invention.
FIG. 7 is a perspective view of a lower jaw plate, which is a component of the jaw relation recording apparatus for manufacturing a digital denture according to the first embodiment of the present invention.
FIG. 8 is a bottom view of the lower jaw plate, which is a component of the jaw relation recording apparatus for manufacturing a digital denture according to the first embodiment of the present invention.
FIG. 9 is a rear view of the lower jaw plate, which is a component of the jaw relation recording apparatus for manufacturing a digital denture according to the first embodiment of the present invention.
FIG. 10 is a perspective view of an anterior handle, which is a component of the jaw relation recording apparatus for manufacturing a digital denture according to the first embodiment of the present invention.
FIG. 11 is a perspective view of an upper side of an upper jaw plate, which is a component of the jaw relation recording apparatus for manufacturing a digital denture according to a second embodiment of the present invention.
FIG. 12 is a perspective view of a lower side of a lower jaw plate, which is a component of the jaw relation recording apparatus for manufacturing a digital denture according to the second embodiment of the present invention.
FIG. 13 is an exploded perspective view showing coupling between the upper jaw plate and an anterior guide member, which are components of the jaw relation recording apparatus for manufacturing a digital denture according to the second embodiment of the present invention.
FIG. 14 is a perspective view of the anterior guide member, which is a component of the jaw relation recording apparatus for manufacturing a digital denture according to the second embodiment of the present invention.
FIG. 15 is a front view of the upper jaw plate with the anterior guide member assembled thereto, which is a component of the jaw relation recording apparatus for manufacturing a digital denture according to the second embodiment of the present invention.
FIG. 16 is a perspective view of a lower jaw plate, which is a component of the jaw relation recording apparatus for manufacturing a digital denture according to the second embodiment of the present invention.
FIG. 17 is a plan view of the lower jaw plate, which is a component of the jaw relation recording apparatus for manufacturing a digital denture according to the second embodiment of the present invention.
FIG. 18 is (a) a front view and (b) a rear view of the upper jaw plate in which a vertical dimension is adjusted using a screw in the jaw relation recording apparatus for manufacturing a digital denture according to the second embodiment of the present invention.
FIG. 19 is an exploded perspective view showing coupling between the upper jaw plate and an occlusal plane recording device connection member in the jaw relation recording apparatus for manufacturing a digital denture according to the second embodiment of the present invention.
FIG. 20 is a front view of the jaw relation recording apparatus for manufacturing a digital denture with the occlusal plane recording device connected thereto according to the second embodiment of the present invention.
FIG. 21 is a perspective view of a facial scanner scanning a patient' s oral cavity, which is a component of the jaw relation recording apparatus for manufacturing a digital denture according to the second embodiment of the present invention.

### MODES OF THE INVENTION

Hereinafter, exemplary embodiments of the present invention will be described in detail so that those of ordinary skill in the art can readily implement the present invention with reference to the accompanying drawings. The present invention may be embodied in many different forms and is not limited to the embodiments set forth herein. In the drawings, parts unrelated to the description are omitted for clarity of description of the present invention, and throughout the specification, same or similar reference numerals denote same elements.

The words and terms used in the present specification and claims should not be interpreted as being limited to their ordinary or dictionary meanings, but should be construed as having meanings and concepts consistent with the technical spirit of the present invention, in accordance with the principle that an inventor may define terms and concepts to best describe their invention.

Accordingly, the embodiments described in the present specification and the configurations shown in the drawings correspond to preferred embodiments of the present invention, and do not represent all the technical spirit of the present invention, so the configurations may have various examples of equivalent and modification that can replace them at the time of filing the present invention.

It should be understood that the terms "comprise or include" or "have" or the like when used in this specification, are intended to describe the presence of stated features, numbers, steps, operations, elements, components and/or a combination thereof but not preclude the possibility of the presence or addition of one or more other features, numbers, steps, operations, elements, components, or a combination thereof.

The presence of an element in/on "front" , "rear" , "upper or above or top" or "lower or below or bottom" of another element includes not only being disposed in/on "front" , "rear" , "upper or above or top" or "lower or below or bottom" directly in contact with other elements, but also cases in which another element being disposed in the middle, unless otherwise specified. In addition, unless otherwise specified, that an element is "connected" to another element includes not only direct connection to each other but also indirect connection to each other.

Hereinafter, exemplary embodiments of a jaw relation recording apparatus for manufacturing a digital denture according to an embodiment of the present invention will be described with reference to the drawings.

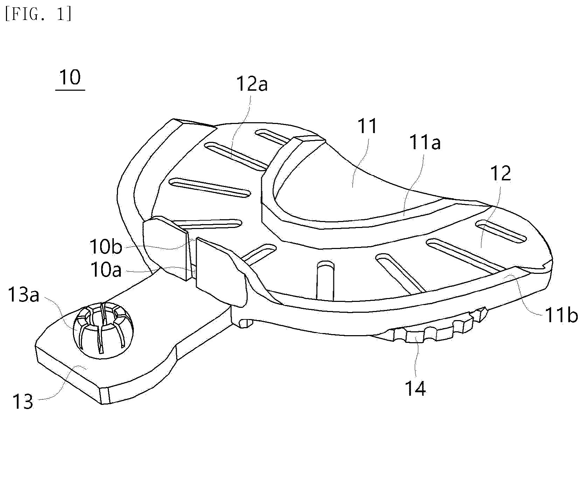

A jaw relation recording apparatus for manufacturing a digital denture according to a first embodiment of the present invention may include, as shown in FIGS. 1 to 10, an upper jaw plate 10, a lower jaw plate 20, an anterior handle 40, and a vertical dimension recording screw 60.

Referring to FIGS. 1 to 7, the upper jaw plate 10 may have impression material provided on an upper surface thereof so as to acquire an impression of upper jaw gums.

In this case, the upper jaw plate 10 may include a body 11 formed as a planar semicircular panel corresponding to the upper jaw, and partition walls 11a and 11b formed along tooth positions so that the impression material can be retained and seated thereon. Accordingly, an impression of the upper jaw can be acquired by supplying the impression material into an impression material supply path 12 between the partition walls 11a and 11b and then having the patient bite. The partition walls 11a and 11b are composed of an inner partition wall 11a and an outer partition wall 11b, the impression material being supplied between the inner partition wall 11a and the outer partition wall 11b, and their positions also correspond to positions of teeth arranged in the upper jaw.

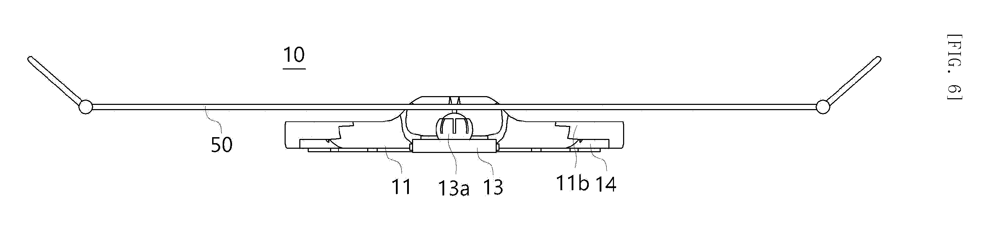

In this case, a horizontal bar 50 for occlusal plane recording may be assembled on one side of the upper jaw plate 10 so as to be detachable and rotatable. That is, referring to FIG. 6, a handle 13 protruding forward may be provided at the front end of the upper jaw plate 10, and the handle 13 may be provided with a spherical groove 13a for receiving a rotary sphere 51 provided at the center of the horizontal bar 50. Here, the spherical groove 13a is open at the top and provided with a plurality of slits on its side surfaces so that the rotary sphere 51 can be detachably mounted by an interference fit.

At this time, the handle 13 of the upper jaw plate 10 may be disposed at a position lower than the body 11 of the upper jaw plate 10.

At this time, a seating groove 12a or a projection may be provided on a surface of the upper jaw plate 10 where the impression material is placed, so that the impression material can be seated at the same position even during reassembly. During reassembly, the seating groove 12a or the projection aligns the position of the impression material with that of the upper jaw plate 10. Here, the seating groove 12a or the projection may be formed as a protrusion or a groove together with the opposite surface on the panel plane, or may be formed regardless of the opposite surface.

At this time, the upper jaw plate 10 may be provided with a friction part 14, composed of a plurality of ridges and grooves, so as not to slip inside the oral cavity. The friction part 14 may be formed to protrude in a serrated shape outward in parallel with the panel, which is the body 11 of the upper jaw plate 10. By means of the friction part 14, the upper jaw plate 10 is prevented from slipping inside the oral cavity and thereby helps the upper jaw plate 10 maintain its fixed position in the oral cavity.

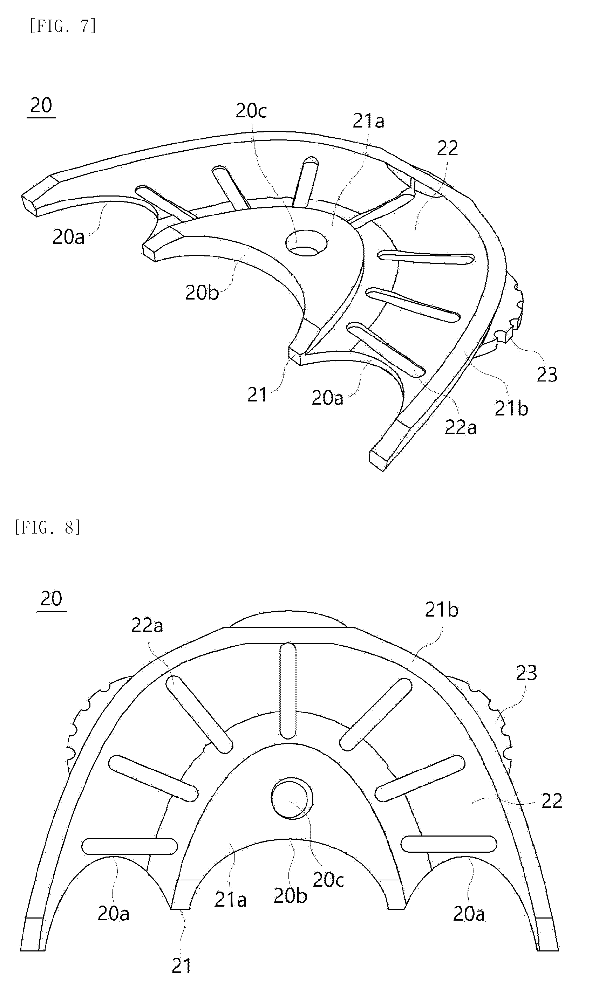

As shown in FIGS. 7 to 9, the lower jaw plate 20 may have impression material provided on a lower surface thereof so as to acquire an impression of lower jaw gums.

In this case, the lower jaw plate 20 may include a body 21 formed as a planar semicircular panel corresponding to the lower jaw, and partition walls 21a and 21b formed along tooth positions so that the impression material can be retained and seated thereon. Here, the partition walls 21a and 21b are composed of an inner partition wall 21a and an outer partition wall 21b, and impression material is provided in an impression material supply path 22 between the inner partition wall 21a and the outer partition wall 21b, so that the patient bites thereon in the oral cavity to acquire an impression of the lower jaw.

In this case, the lower jaw plate 20 may be formed in a panel shape, and a first cutout 20a may be formed at a posterior portion where molars are located so as to avoid gingival interference during mandibular movement and to allow the impression material to be compacted by finger pressure. The reason for forming the first cutout 20a is that the portion where the molars are located is formed higher than other portions. Therefore, by forming the first cutout 20a, an accurate impression can be acquired without interference during lower jaw impression taking.

In this case, the lower jaw plate 20 may be provided with a second cutout 20b at a central rear portion so as to avoid interference with the tongue and to allow the tongue to flow posteriorly, thereby enabling the patient to easily close the mouth in a centric relation.

At this time, the first and second cutouts 20a and 20b may be formed in an arcuate shape on the plane.

At this time, a seating groove 22a or a projection may be provided on a surface of the lower jaw plate 20 where the impression material is placed, so that the impression material can be seated at the same position even during reassembly. Such a seating groove 22a or a projection is formed for the same reason as in the upper jaw plate 10.

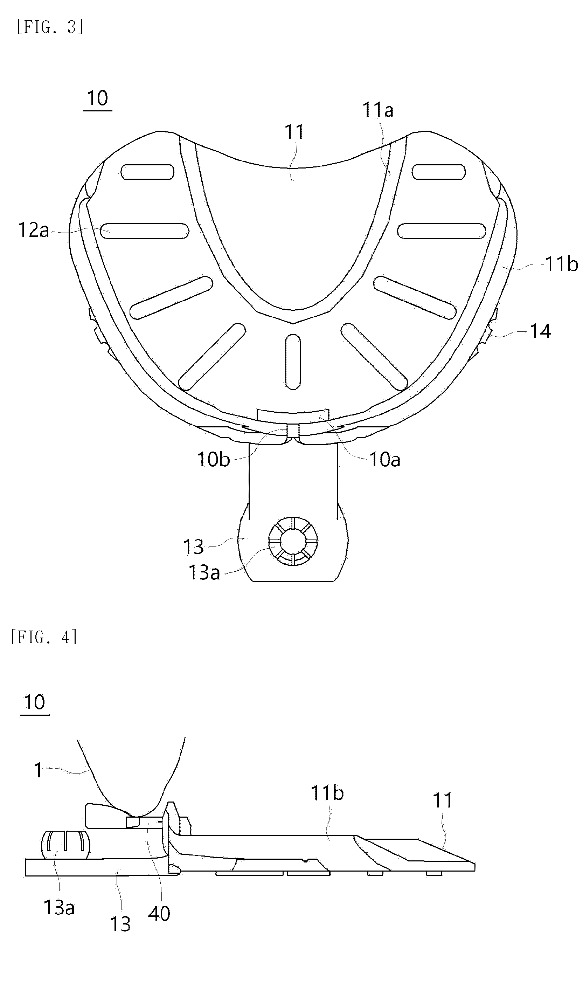

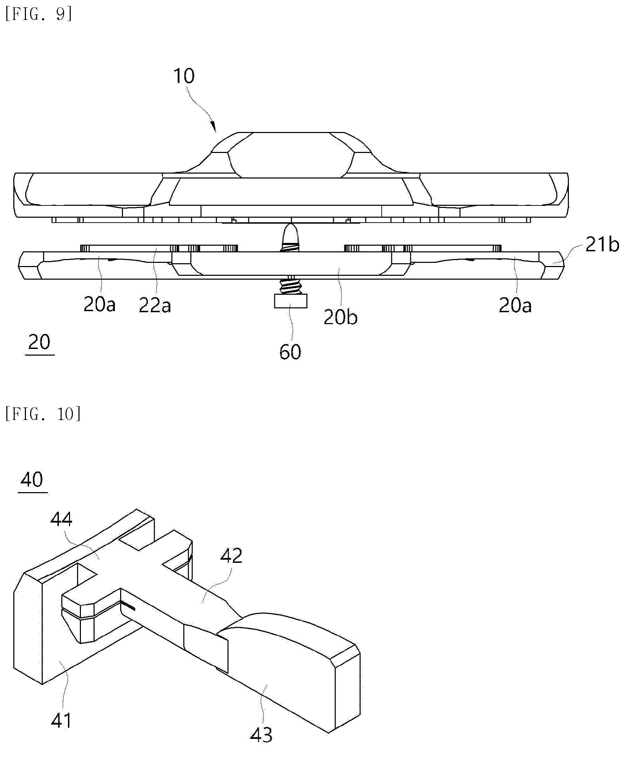

As shown in FIGS. 4 and 10, the anterior handle 40 may be mounted at a front end portion of the upper jaw plate 10 so that an upper lip 1 can come into contact with one side thereof with an adjustable height, thereby enabling acquisition of an incisal position of the upper anterior teeth.

In this case, the anterior handle 40 is assembled to the upper jaw plate 10 after the impression material is provided on the upper jaw plate 10. Accordingly, a practitioner may cut the impression material near a coupling groove 10a of the upper jaw plate 10, to which the anterior handle 40 is coupled, by using a knife.

In this case, the anterior handle 40 may be partially inserted into the coupling groove 10a disposed at the front end of the upper jaw plate 10, adjusted in height, and then fixed.

In this case, the anterior handle 40 may include an insertion part 41, an extension part 42, and a grip part 43.

In this case, the insertion part 41 may be inserted into the coupling groove 10a formed in the upper jaw plate 10 in a vertical direction so that the height can be adjusted and fixed. Here, the height of the anterior handle 40 may be adjusted depending on the depth to which the insertion part 41 is inserted into the coupling groove 10a. Accordingly, a practitioner can accurately adjust the height by determining the level at which the upper lip 1 comes into contact.

The extension part 42 may have one end fixed to the insertion part 41 and the other end extended horizontally so that it can come into contact with the upper lip 1 during a procedure. In this case, between the extension part 42 and the insertion part 41, a fitting part 44 may be formed to be inserted into a cut groove 10b formed in the outer partition wall 11b of the upper jaw plate 10. By attaching and detaching the fitting part 44 and the insertion part 41, the frictional force between the upper jaw plate 10 and the anterior handle 40 is increased, thereby preventing the anterior handle 40 from slipping and allowing it to be fixed at the adjusted height.

The grip part 43 may be provided to extend from the other end of the extension part 42. The grip part 43 is formed in a vertically upright panel shape so that it can be easily grasped with the thumb and index finger.

Referring to FIG. 9, the vertical dimension recording screw 60 may be screw-coupled through a nut hole 20c of the lower jaw plate 20 so as to record the vertical dimension between the upper jaw plate 10 and the lower jaw plate 20. By rotating the vertical dimension recording screw 60, a practitioner may adjust the vertical distance between the upper jaw plate 10 and the lower jaw plate 20.

In this case, before applying the vertical dimension recording screw 60 to the lower jaw plate 20, impression material provided therein may be cut away with a knife so as not to cause interference.

In this case, with the vertical dimension recording screw 60 fixed to the lower jaw plate 20, a colored substance such as rouge may be applied to a portion of the upper jaw plate 10 that comes into contact with the vertical dimension recording screw 60. By moving the upper and lower jaws in anterior-posterior and lateral directions, an intersection point drawn by a tip of the vertical dimension recording screw 60 on the upper jaw plate 10 can be recorded as a centric relation of the mandible.

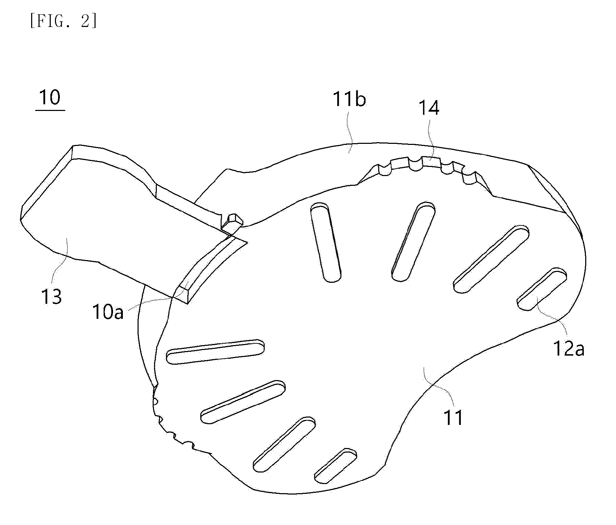

FIG. 1 illustrates a perspective view of an upper side of an upper jaw plate 10, which is a component of a jaw relation recording apparatus for manufacturing a digital denture according to a first embodiment of the present invention. FIG. 2 illustrates a perspective view of a lower side of the upper jaw plate 10, which is a component of the jaw relation recording apparatus for manufacturing a digital denture according to the first embodiment of the present invention. FIG. 3 illustrates a plan view of the upper jaw plate 10, which is a component of the jaw relation recording apparatus for manufacturing a digital denture according to the first embodiment of the present invention. The upper jaw plate 10 is formed in a panel shape, and a handle 13 is protrudingly formed at a front portion thereof. The handle 13 is formed in a panel shape parallel to the body 11 of the upper jaw plate 10, and a spherical groove 13a into which a rotary sphere 51 of a horizontal bar 50 for facebow transfer and occlusal plane recording is inserted is formed on an upper surface of the handle 13. Such a horizontal bar 50 may be directly applied using a product that the present applicant actually sells under the trademark "ADD POP BOW." The body 11 of the upper jaw plate 10 is formed with an inner partition wall 11a and an outer partition wall 11b, and impression material is provided therebetween. At this time, a seating groove 12a is formed on a bottom surface between the partition walls 11a and 11b so that the impression material and the upper jaw plate 10 can be reassembled in alignment with each other. A friction part 14 in a serrated shape is provided on an outer surface of the body 11 of the upper jaw plate 10 to prevent slipping movement after the plate is positioned in the oral cavity. In addition, the body 11 is formed with a coupling groove 10a penetrating therethrough for mounting the anterior handle 40, and a cut groove 10b connected to the coupling groove 10a and cut through the outer partition wall 11b is formed.

FIG. 4 illustrates a right side view of the upper jaw plate 10 with an anterior handle 40 mounted thereto, which is a component of the jaw relation recording apparatus for manufacturing a digital denture according to the first embodiment of the present invention. The insertion part 41 of the anterior handle 40 is inserted into the coupling groove 10a of the upper jaw plate 10, and at the same time, the fitting part 44 of the anterior handle 40 is inserted into the cut groove 10b. When a practitioner adjusts the height, the anterior handle 40 is coupled to and fixed to the upper jaw plate 10. At this time, the extension part 42 of the anterior handle 40 comes into contact with the upper lip 1. In this case, the practitioner communicates to the dental technician that the incisal position of the upper anterior teeth is positioned 1 mm below the lower end of the upper lip 1, and, by using the anterior handle 40, confirms the lip height of the patient and fixes it accordingly.

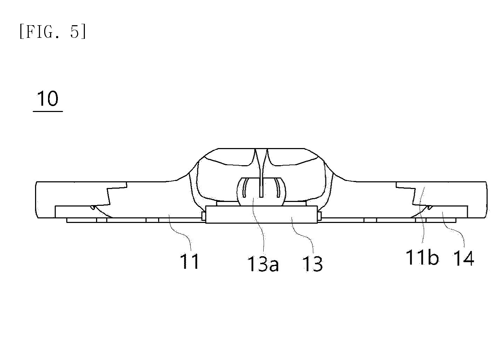

FIG. 5 illustrates a front view of the upper jaw plate, which is a component of the jaw relation recording apparatus for manufacturing a digital denture according to the first embodiment of the present invention. When the upper jaw plate 10 is positioned inside the oral cavity, the front handle 13 protrudes outward from the oral cavity so that a practitioner can manipulate it, and slipping inside the oral cavity can be prevented by a friction part 14 formed on the side surface.

FIG. 6 illustrates a front view of the upper jaw plate 10 with a horizontal bar 50 for occlusal plane recording coupled thereto, which is a component of the jaw relation recording apparatus for manufacturing a digital denture according to the first embodiment of the present invention. The rotary sphere 51 provided on the horizontal bar 50 is inserted into the spherical groove 13a to be coupled, thereby enabling recording of the occlusal plane.

FIG. 7 illustrates a perspective view of a lower jaw plate, which is a component of the jaw relation recording apparatus for manufacturing a digital denture according to the first embodiment of the present invention. FIG. 8 illustrates a bottom view of the lower jaw plate, which is a component of the jaw relation recording apparatus for manufacturing a digital denture according to the first embodiment of the present invention. The lower jaw plate 20 has a body 21 of a semi-circular panel, and is provided with an inner partition wall 21a and an outer partition wall 21b, between which impression material may be supplied. A seating groove 22a is formed in the impression material supply path 22 through which the impression material is supplied, in order to confirm an accurate position during reassembly. At the rear of the lower jaw plate 20, first cut grooves 20a are formed on both sides, and a second cut groove 20b is formed at the center. The first cut grooves 20a can prevent inaccurate impression taking caused by interference with molars, and the second cut groove 20b can reduce interference caused by the movement of the tongue. At the central portion of the lower jaw plate 20, a nut hole 20c is formed, and the vertical dimension recording screw 60 may be screw-coupled to the nut hole 20c. On a side surface of the lower jaw plate 20, a friction part 23 having a serrated shape is provided, similar to the upper jaw plate **10.**

FIG. 9 illustrates a rear view of the lower jaw plate, which is a component of the jaw relation recording apparatus for manufacturing a digital denture according to the first embodiment of the present invention, together with the upper jaw plate. Impression material is supplied to the upper jaw plate 10 and the lower jaw plate 20 to acquire an impression, and the vertical dimension recording screw 60 is rotated and adjusted by a practitioner. Here, in addition to recording the vertical dimension, a colored substance such as rouge is applied to a bottom surface of the upper jaw plate 10, and by moving the upper and lower jaws in anterior-posterior and lateral directions, an intersection point drawn on the upper jaw plate 10 by a tip of the vertical dimension recording screw 60 can be recorded as the centric relation of the mandible.

FIG. 10 illustrates a perspective view of an anterior handle, which is a component of the jaw relation recording apparatus for manufacturing a digital denture according to the first embodiment of the present invention. The anterior handle 40 is provided with an insertion part 41 to be inserted into the coupling groove 10a, and an extension part 42 extending from the insertion part 41. A fitting part 44, which is a portion of the extension part 42, is inserted into the cut groove 10b to increase fixing force together with the insertion part 41 at an adjusted position. A grip part 43 is formed at one end of the extension part 42. Here, the anterior handle 40 may also be integrally formed.

By using the jaw relation recording apparatus for manufacturing a digital denture according to the first embodiment of the present invention as described above, the digital denture fabrication process can be completed within two or three dental visits.

In a case where a digital denture is fabricated within two dental visits, an impression for fabricating a working model is acquired on the first dental visit. By using the jaw relation recording apparatus for manufacturing a digital denture according to the present invention, a jaw relation is recorded and acquired. At this time, determination of the anterior tooth length, determination of the vertical dimension, and recording of the horizontal jaw relation may be performed. Then, a horizontal bar (ADD POP BOW) is connected to perform facebow transfer. Next, an intraoral scan is performed while the horizontal bar remains mounted. These results and digital data are delivered to a dental laboratory. The dental laboratory fabricates a final denture after a predetermined period of time. On the second dental visit, the final denture is placed and adjusted to complete the procedure.

In a case where a digital denture is fabricated within three dental visits, an impression is acquired and, at the same time, a jaw relation is recorded on the first dental visit by using the jaw relation recording apparatus for manufacturing a digital denture according to the present invention. At this time, determination of the anterior tooth length, determination of the vertical dimension, and recording of the horizontal jaw relation may be performed. A horizontal bar is connected to carry out facebow transfer. An intraoral scan is performed with the horizontal bar mounted, and such information is delivered to a dental laboratory. The dental laboratory fabricates a temporary denture to be used for a predetermined period. On the second dental visit, a wash impression is acquired by using the temporary denture. When this information is delivered to the dental laboratory, the dental laboratory fabricates a final denture. On the third dental visit, the final denture is placed and adjusted to complete the procedure.

A jaw relation recording apparatus for manufacturing a digital denture according to a second embodiment of the present invention may include an upper jaw plate 110, a lower jaw plate 120, an anterior guide member 130, and a vertical dimension recording screw 160.

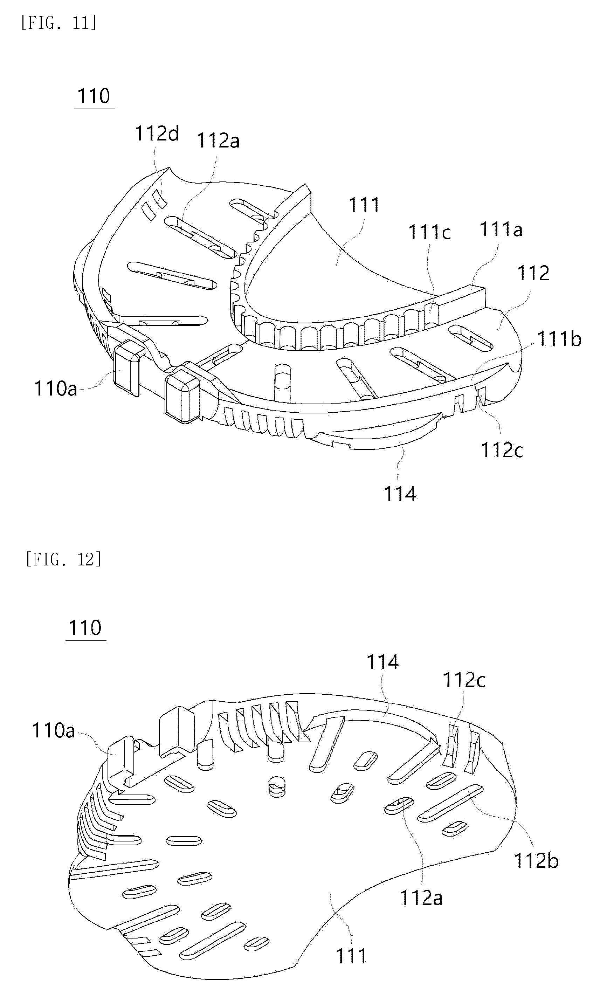

As shown in FIGS. 11 and 12, the upper jaw plate 110 may have impression material provided on an upper surface thereof so as to be able to acquire an impression of upper jaw gums.

In this case, the upper jaw plate 110 may include a body 111 formed as a planar semicircular panel corresponding to the upper jaw, and partition walls 111a and 111b formed along tooth positions so that the impression material can be retained and seated thereon. Accordingly, an impression of the upper jaw can be acquired by supplying the impression material into an impression material supply path 112 between the partition walls 111a and 111b and then having the patient bite. The partition walls 111a and 111b are composed of an inner partition wall 111a and an outer partition wall 111b, the impression material being supplied between the inner partition wall 111a and the outer partition wall 111b, and their positions also correspond to positions of teeth arranged in the upper jaw.

At this time, the anterior guide member 130 or an occlusal plane recording device connection member 140 may be detachably mounted at a front end portion of the upper jaw plate 110. Here, an occlusal plane recording device may be coupled to the occlusal plane recording device connection member 140.

At this time, a seating groove 112a or a projection may be provided on a surface of the upper jaw plate 110 where the impression material is placed, so that the impression material can be seated at the same position even during reassembly. During reassembly, the seating groove 112a or the projection aligns the position of the impression material with that of the upper jaw plate 110. Here, the seating groove 112a or the projection may be formed as a protrusion or a groove together with the opposite surface on the panel plane, or may be formed regardless of the opposite surface.

At this time, a hole 112d or grooves 112a, 112b, and 112c may be formed in the upper jaw plate 110 or the lower jaw plate 120 so that impression material can flow therein and increase bonding strength. In the upper jaw plate 110, together with a seating groove 112a, a hole is formed not only to be used for seating during reassembly but also to allow impression material to smoothly flow and be provided.

At this time, the upper jaw plate 110 may be provided with a friction part 114, composed of a plurality of ridges and grooves, so as not to slip inside the oral cavity. The friction part 114 may be formed to protrude in a serrated shape outward in parallel with the panel, which is the body 111 of the upper jaw plate 110. By means of the friction part 114, the upper jaw plate 110 is prevented from slipping inside the oral cavity and thereby helps the upper jaw plate 10 maintain its fixed position in the oral cavity.

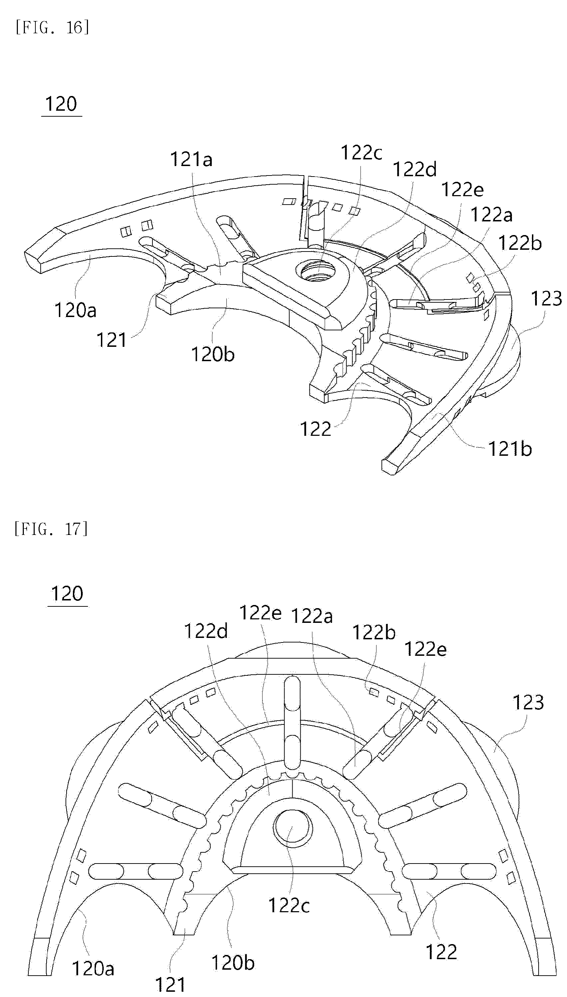

As shown in FIGS. 16 and 17, the lower jaw plate 120 may have impression material provided on a lower surface thereof so as to acquire an impression of lower jaw gums.

In this case, the lower jaw plate 120 may include a body 121 formed as a planar semicircular panel corresponding to the lower jaw, and partition walls 121a and 121b formed along tooth positions so that the impression material can be retained and seated thereon. Here, the partition walls 121a and 121b are composed of an inner partition wall 121a and an outer partition wall 121b, and impression material is provided in an impression material supply path 122 between the inner partition wall 121a and the outer partition wall 121b, so that the patient bites thereon in the oral cavity to acquire an impression of the lower jaw.

In this case, the lower jaw plate 120 may be formed in a panel shape, and a first cutout 120a may be formed at a posterior portion where molars are located so as to avoid gingival interference during mandibular movement and to allow the impression material to be compacted by finger pressure. The reason for forming the first cutout 120a is that the portion where the molars are located is formed higher than other portions. Therefore, by forming the first cutout 120a, an accurate impression can be acquired without interference during lower jaw impression taking.

In this case, the lower jaw plate 120 may be provided with a second cutout 120b at a central rear portion so as to avoid interference with the tongue and to allow the tongue to flow posteriorly, thereby enabling the patient to easily close the mouth in a centric relation.

At this time, the first and second cutouts 120a and 120b may be formed in an arcuate shape on the plane.

At this time, a seating groove 122a or a projection may be provided on a surface of the lower jaw plate 120 where the impression material is placed, so that the impression material can be seated at the same position even during reassembly. Such a seating groove 122a or a projection is formed for the same reason as in the upper jaw plate 110.

At this time, a hole 122b may be formed in the lower jaw plate 120 so that impression material can be evenly provided.

Referring to 13 to 15, the anterior guide member 130 may be detachably coupled to a front end portion of the upper jaw plate 110, may acquire a lip index relation after being coupled, and may reproduce an esthetic position of anterior teeth through a facial scanner 170 in the coupled state.

At this time, the anterior guide member 130 may be formed in the shape of six maxillary anterior teeth 131. Such a shape of six maxillary anterior teeth may be fabricated with reference to standard maxillary anterior teeth.

At this time, the anterior guide member 130 may be detachably mounted to a front end portion of the upper jaw plate 110 so that its height can be adjusted in a vertical direction with respect to the upper jaw plate 110.

At this time, the anterior guide member 130 may be configured such that an insertion part 132 is formed in the anterior guide member 130 to allow sliding with the upper jaw plate 110, and a groove part 110a into which the insertion part 132 slides is formed in the upper jaw plate 110, or vice versa.

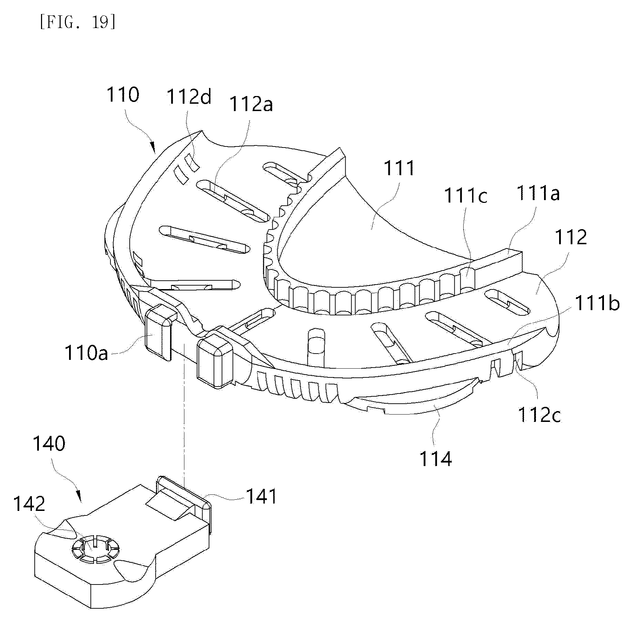

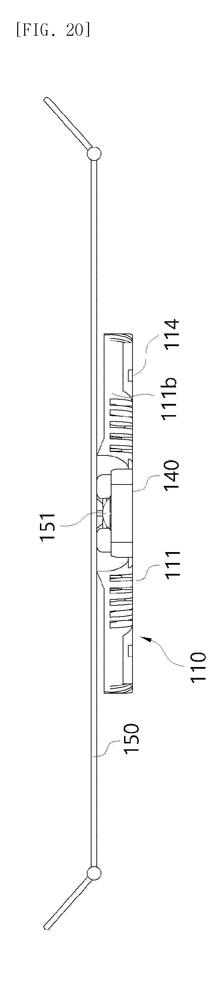

Referring to FIGS. 19 and 20, the occlusal plane recording device connection member 140 may be detachably coupled to a front end portion of the upper jaw plate 110 instead of the anterior guide member 130, and an occlusal plane recording device may be coupled thereto.

At this time, a spherical groove 142 for receiving a rotary sphere 151 of the occlusal plane recording device may be formed in the occlusal plane recording device connection member 140.

At this time, similarly to the anterior guide member 130, an insertion part 141 may be formed in the occlusal plane recording device connection member 140 so as to be slidably assembled into the groove part 110a of the upper jaw plate 110.

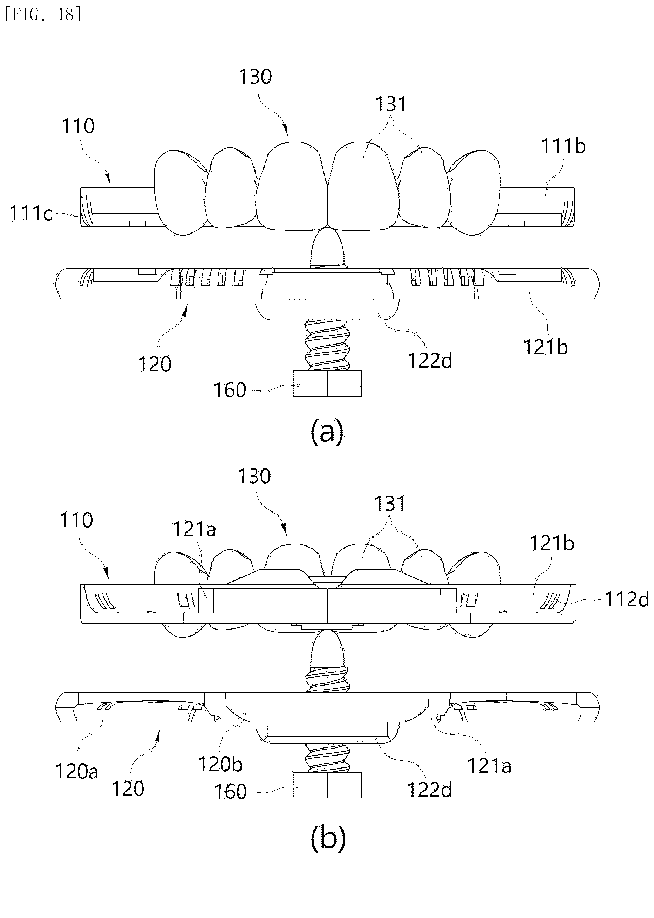

Referring to FIG. 18, the vertical dimension recording screw 160 may be screw-coupled through one side of the lower jaw plate 120 so as to record the vertical dimension between the upper jaw plate 110 and the lower jaw plate 120.

In this case, referring to FIG. 16, a nut hole 122c is formed in a thickness reinforcement part 122d of the lower jaw plate 120, and the vertical dimension recording screw 160 is fastened to the nut hole 122c, thereby enabling adjustment of the height.

FIG. 11 illustrates a perspective view of an upper side of an upper jaw plate, which is a component of the jaw relation recording apparatus for manufacturing a digital denture according to a second embodiment of the present invention. FIG. 12 illustrates a perspective view of a lower side of a lower jaw plate, which is a component of the jaw relation recording apparatus for manufacturing a digital denture according to the second embodiment of the present invention. In the illustrated embodiment, the upper jaw plate 110 is formed in a panel shape, and a groove part 110a is protrudingly formed at a front portion thereof. The body 111 of the upper jaw plate 10 is formed with an inner partition wall 111a and an outer partition wall 111b, and impression material is provided therebetween. At this time, a seating groove 112a is formed on a bottom surface between the partition walls 111a and 111b so that the impression material and the upper jaw plate 110 can be reassembled in alignment with each other. A part of the seating groove 112a may be formed as a hole. A plurality of holes 112d are also formed in the outer partition wall 111b to facilitate the supply of impression material. A plurality of round-shaped grooves 111c are formed in the inner partition wall 111a so as to face inward. By means of the round-shaped grooves 111c, the impression material can smoothly find its proper position during reassembly. A friction part 114 in a serrated shape is protrudingly provided on an outer surface of the body 111 of the upper jaw plate 110 to prevent slipping movement after the plate is positioned in the oral cavity. A plurality of grooves 112b may also be formed on a lower surface of the upper jaw plate 110, and a plurality of grooves 112c may be formed on an outer surface of the outer partition wall 111b.

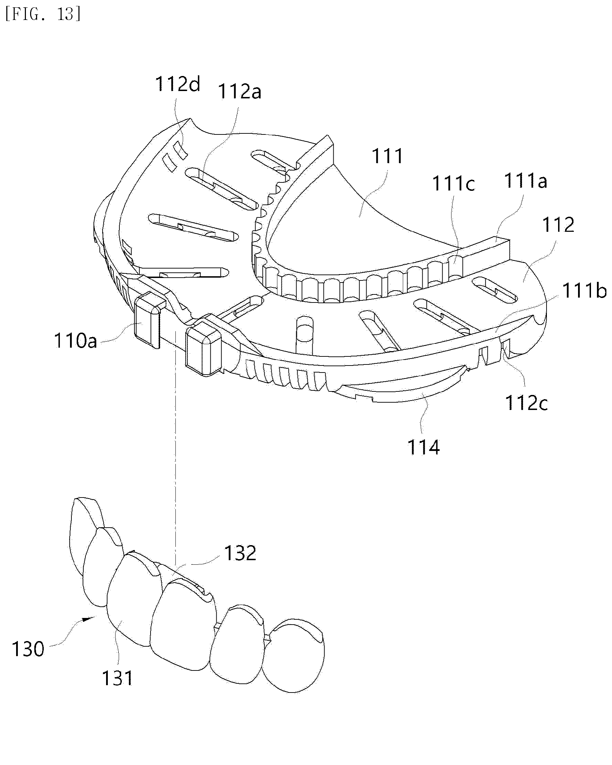

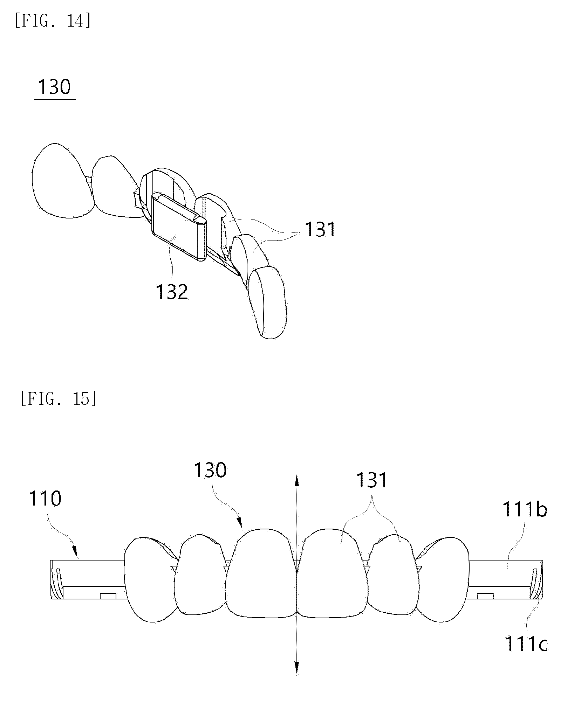

FIG. 13 illustrates an exploded perspective view showing coupling between the upper jaw plate and an anterior guide member, which are components of the jaw relation recording apparatus for manufacturing a digital denture according to the second embodiment of the present invention. FIG. 14 illustrates a perspective view of the anterior guide member, which is a component of the jaw relation recording apparatus for manufacturing a digital denture according to the second embodiment of the present invention. FIG. 15 illustrates a front view of the upper jaw plate with the anterior guide member assembled thereto, which is a component of the jaw relation recording apparatus for manufacturing a digital denture according to the second embodiment of the present invention. In the illustrated embodiment, the anterior guide member 130 is provided with a sliding insertion part 132, and a groove part 110a, into which the insertion part 132 is slidably inserted, is provided at a front portion of the upper jaw plate 110. Accordingly, the anterior guide member 130 can be assembled to the front of the upper jaw plate 110 in a sliding manner through the insertion part 132 and the groove part 110a, and its height can also be adjusted. The anterior guide member 130 may be fabricated in the form of six standard maxillary anterior teeth 131. By coupling the anterior guide member 130 to the upper jaw plate 110, the position of the anterior teeth can be set based on the patient' s facial appearance, and height adjustment and attachment/detachment are of course possible.

FIG. 16 illustrates a perspective view of a lower jaw plate, which is a component of the jaw relation recording apparatus for manufacturing a digital denture according to the second embodiment of the present invention. FIG. 17 illustrates a plan view of the lower jaw plate, which is a component of the jaw relation recording apparatus for manufacturing a digital denture according to the second embodiment of the present invention. In the illustrated embodiment, the lower jaw plate 120 has a body 121 of a semi-circular panel, and is provided with an inner partition wall 121a and an outer partition wall 121b, between which impression material may be supplied. A seating groove 122a is formed in the impression material supply path 122 through which the impression material is supplied, in order to confirm an accurate position during reassembly. Part of the seating groove 122a of the lower jaw plate may be formed in the shape of a hole. A hole 122b for supplying impression material may also be formed in the outer partition wall 121b. At the rear of the lower jaw plate 120, first cut grooves 120a are formed on both sides, and a second cut groove 120b is formed at the center. The first cut grooves 120a can prevent inaccurate impression taking caused by interference with molars, and the second cut groove 120b can reduce interference caused by the movement of the tongue. At the central portion of the lower jaw plate 120, a nut hole 120c is formed, and the vertical dimension recording screw 160 may be screw-coupled to the nut hole 120c. A thickness reinforcement part 122d is formed at the portion where the nut hole 120c is formed so that the thickness is greater than other portions. By increasing the thickness of the portion where the nut hole 122c is formed, the vertical dimension recording screw 160 can be maintained in its position without shaking, thereby enabling accurate recording of the vertical dimension. On a side surface of the lower jaw plate 120, a friction part 123 having a serrated shape is provided, similar to the upper jaw plate 110. In addition, a tear-off part 122e is formed at a front side of the lower jaw plate 120 so that a strip-shaped portion can be cut off. The tear-off part 122e may be formed as a portion thinner than other portions, connecting cut portions on both sides. When a dentist moves the front portion of the tear-off part 122e vertically as needed, the tear-off part 122e is cut in a strip shape and can be separated from the lower jaw plate 120.

FIG. 18 illustrates (a) a front view and (b) a rear view of the upper jaw plate in which a vertical dimension is adjusted using a screw in the jaw relation recording apparatus for manufacturing a digital denture according to the second embodiment of the present invention. The vertical dimension can be adjusted by using the vertical dimension recording screw 160, and the position of the anterior teeth can be set based on the patient' s facial appearance by using the anterior guide member 130 coupled to the upper jaw plate 110.

FIG. 19 illustrates an exploded perspective view showing coupling between the upper jaw plate and an occlusal plane recording device connection member in the jaw relation recording apparatus for manufacturing a digital denture according to the second embodiment of the present invention. FIG. 20 illustrates a front view of the jaw relation recording apparatus for manufacturing a digital denture with the occlusal plane recording device connected thereto according to the second embodiment of the present invention. The occlusal plane recording device connection member 140, like the anterior guide member 130, can be slidably assembled to a front portion of the upper jaw plate 110 by using a sliding insertion part 141 and a groove part 110a. A spherical groove 142 into which a rotary sphere 151 of the occlusal plane recording device is inserted is formed in the occlusal plane recording device connection member 140, and a portion of the surface forming the spherical groove 142 is cut away so as to facilitate assembly and disassembly. More specifically, the spherical groove 142 is formed to receive the rotary sphere 151 of a horizontal bar 150 of the occlusal plane recording device for facebow transfer and occlusal plane recording. Such a horizontal bar 150 may be directly applied using a product that the present applicant actually sells under the trademark "ADD POP BOW."

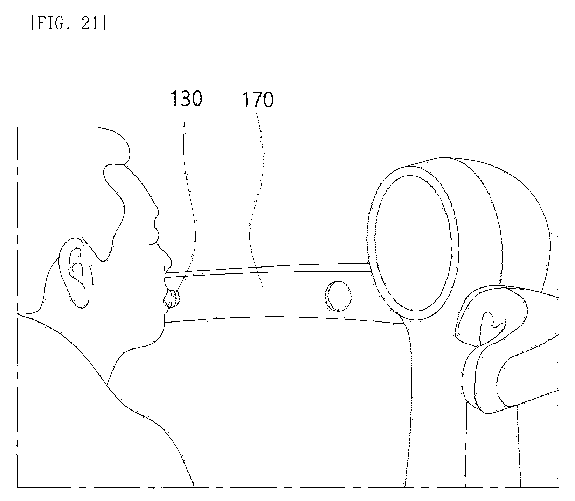

FIG. 21 illustrates a perspective view of a facial scanner scanning a patient' s oral cavity, which is a component of the jaw relation recording apparatus for manufacturing a digital denture according to the second embodiment of the present invention. In the illustrated embodiment, the oral cavity of the patient can be scanned with the facial scanner 170 in a state where the upper and lower jaw plates 110 and 120, the anterior guide member 130, and the screw 160 are all installed and the procedure is performed as described above.

By using the jaw relation recording apparatus for manufacturing a digital denture according to the second embodiment of the present invention as described above, the digital denture fabrication process can be completed on the same day of a first dental visit or within two dental visits.

In a case where a digital denture is fabricated in a single dental visit on the same day, the upper and lower jaws are first scanned (first scan information). An impression is acquired and, at the same time, a jaw relation is recorded by using the jaw relation recording apparatus (JP fork) according to the present invention. The records acquired here may include determination of the anterior tooth length, determination of the vertical dimension, and recording of the horizontal jaw relation. Thereafter, while the jaw relation recording apparatus is positioned in the oral cavity, scanning is performed with a facial scanner (second scan information).

The above-described information is transferred to a dental laboratory.

In the dental laboratory, the first scan information and the second scan information obtained in the hospital are superimposed in a facial scanner program, and a reference plane is set based on the patient' s facial appearance. Thereafter, the data are transferred to a CAD program, and a denture is designed in accordance with the reference plane. The designed denture is fabricated by using CAM or a 3D printer or the like. Finally, the final denture is placed and adjusted to complete the procedure. Here, if treatment is performed in the morning, the denture can be completed and placed in the afternoon.

In a case where a digital denture is fabricated within two dental visits without using a facial scanner, on the first dental visit, the upper and lower jaws are first scanned (first scan information). A jaw relation is recorded by using the jaw relation recording apparatus according to the present invention. At this time, the anterior tooth length, the vertical dimension, and the horizontal jaw relation may be determined and recorded. Then, a horizontal bar (ADD POP BOW) is connected to perform facebow transfer (occlusal plane). Next, an intraoral scan is performed with the horizontal bar mounted (second scan information). These results and digital data are delivered to a dental laboratory. The dental laboratory mounts the data on a virtual articulator on the basis of the occlusal plane obtained by superimposing the first scan information and the second scan information performed in the hospital in a CAD program. At this time, the overlapping point may be the anterior guide member in the shape of six anterior teeth, and the accuracy of the superimposition is confirmed in cross-section, thereby setting the occlusal plane (F-H plane, Camper' s plane).

Thereafter, a denture is designed on the basis of the occlusal plane. The designed denture is fabricated by using CAM or a 3D printer or the like. On the second dental visit, the final denture is placed and adjusted to complete the procedure. Of course, in this case as well, if the process is expedited, fabrication may also be completed on the same day.

Although exemplary embodiments of the present invention have been described, the spirit of the present invention is not limited to the embodiments set forth herein. Those of ordinary skill in the art who understand the spirit of the present invention may easily propose other embodiments through supplement, change, removal, addition, etc. of elements within the same scope of spirit, but the embodiments will be also within the scope of the present invention.

### Industrial Applicability

The present invention can be applied to the fabrication of dentures in dentistry.

## Claims

1. A jaw relation recording apparatus for manufacturing a digital denture, comprising:
an upper jaw plate having impression material provided on an upper surface of the upper jaw plate to acquire an impression of upper jaw gums;
a lower jaw plate having impression material provided on a lower surface of the lower jaw plate to acquire an impression of lower jaw gums; and
an anterior handle configured to acquire an incisal position of upper anterior teeth by adjusting a height of the anterior handle so that an upper lip comes into contact with one side of a front end portion of the upper jaw plate.

2. The jaw relation recording apparatus for manufacturing a digital denture according to claim 1, wherein the anterior handle is partially inserted into a coupling groove disposed at a front end portion of the upper jaw plate, and is then fixed after its height is adjusted.

3. The jaw relation recording apparatus for manufacturing a digital denture according to claim 2,
wherein the anterior handle comprises:
an insertion part inserted in a vertical direction into the coupling groove formed in the upper jaw plate and configured such that its height is adjustable, and fixed;
an extension part having one end fixed to the insertion part and the other end extending horizontally, the extension part being brought into contact with an upper lip during a procedure; and
a grip part extending from the other end of the extension part.

4. The jaw relation recording apparatus for manufacturing a digital denture according to claim 1, wherein a horizontal bar for recording an occlusal plane is configured to be detachably and rotatably assembled to one side of the upper jaw plate.

5. The jaw relation recording apparatus for manufacturing a digital denture according to claim 4, wherein a handle protruding forward is provided at a front end of the upper jaw plate, and the handle is provided with a spherical groove configured to receive a rotary sphere provided at a center of the horizontal bar.

6. The jaw relation recording apparatus for manufacturing a digital denture according to claim 5, wherein the handle of the upper jaw plate is disposed at a position lower than a body of the upper jaw plate.

7. The jaw relation recording apparatus for manufacturing a digital denture according to claim 1, wherein the upper jaw plate or the lower jaw plate is formed as a planar semicircular panel corresponding to the upper jaw or the lower jaw, and partition walls are formed along tooth positions, the upper jaw plate or the lower jaw plate being configured such that the impression material is provided and seated.

8. The jaw relation recording apparatus for manufacturing a digital denture according to claim 1, wherein the lower jaw plate is formed in a panel shape, and a first cutout is formed at a posterior portion where molars are located so as to avoid gingival interference during mandibular movement and to allow the impression material to be compacted by finger pressure.

9. The jaw relation recording apparatus for manufacturing a digital denture according to claim 8, wherein a second cutout is formed at a central rear portion of the lower jaw plate so as to avoid interference with the tongue and to allow the tongue to be moved backward and positioned, thereby enabling the patient to easily close the mouth in a centric relation.

10. The jaw relation recording apparatus for manufacturing a digital denture according to claim 1, wherein a surface of the upper jaw plate or the lower jaw plate on which the impression material is provided is provided with a seating groove or a projection, and is configured such that the impression material is seated in the same position during reassembly.

11. The jaw relation recording apparatus for manufacturing a digital denture according to claim 1, further comprising a vertical dimension recording screw screw-coupled through one side of the lower jaw plate so as to record a vertical dimension between the upper jaw plate and the lower jaw plate.

12. A jaw relation recording apparatus for manufacturing a digital denture, comprising:
an upper jaw plate having impression material provided on an upper surface of the upper jaw plate to acquire an impression of upper jaw gums;
a lower jaw plate having impression material provided on a lower surface of the lower jaw plate to acquire an impression of lower jaw gums; and
an anterior guide member detachably coupled to a front end portion of the upper jaw plate, the anterior guide member being capable of acquiring a lip index relation after being coupled and of reproducing an esthetic position of anterior teeth through a facial scanner in a coupled state.

13. The jaw relation recording apparatus for manufacturing a digital denture according to claim 12, wherein the anterior guide member is formed in the form of six maxillary anterior teeth.

14. The jaw relation recording apparatus for manufacturing a digital denture according to claim 12, wherein the anterior guide member is detachably mounted at a front end portion of the upper jaw plate and is configured to be adjustable in height in a vertical direction with respect to the upper jaw plate.

15. The jaw relation recording apparatus for manufacturing a digital denture according to claim 12, wherein the anterior guide member is slidable with respect to the upper jaw plate, an insertion part being formed in the anterior guide member and a groove part into which the insertion part is slidable being formed in the upper jaw plate, or vice versa.

16. The jaw relation recording apparatus for manufacturing a digital denture according to claim 12, further comprising an occlusal plane recording device connection member that is detachably coupled to a front end portion of the upper jaw plate instead of the anterior guide member, and is configured to have an occlusal plane recording device fastened thereto.

17. The jaw relation recording apparatus for manufacturing a digital denture according to claim 16, wherein the occlusal plane recording device connection member is formed with a spherical groove in which a rotary sphere of the occlusal plane recording device is received.

18. The jaw relation recording apparatus for manufacturing a digital denture according to claim 12, wherein the upper jaw plate or the lower jaw plate is formed with a hole or a groove into which impression material flows so as to increase bonding strength.

19. The jaw relation recording apparatus for manufacturing a digital denture according to claim 12, wherein the upper jaw plate or the lower jaw plate is formed as a planar semicircular panel corresponding to the upper jaw or the lower jaw, and partition walls are formed along tooth positions, the upper jaw plate or the lower jaw plate being configured such that the impression material is provided and seated.

20. The jaw relation recording apparatus for manufacturing a digital denture according to claim 12, wherein the lower jaw plate is formed in a panel shape, and a first cutout is formed at a posterior portion where molars are located so as to avoid gingival interference during mandibular movement and to allow the impression material to be compacted by finger pressure.

21. The jaw relation recording apparatus for manufacturing a digital denture according to claim 20, wherein a second cutout is formed at a central rear portion of the lower jaw plate so as to avoid interference with the tongue and to allow the tongue to be moved backward and positioned, thereby enabling the patient to easily close the mouth in a centric relation.

22. The jaw relation recording apparatus for manufacturing a digital denture according to claim 12, wherein a surface of the upper jaw plate or the lower jaw plate on which the impression material is provided is provided with a seating groove or a projection, and is configured such that the impression material is seated in the same position during reassembly.

23. The jaw relation recording apparatus for manufacturing a digital denture according to claim 12, further comprising a vertical dimension recording screw screw-coupled through one side of the lower jaw plate so as to record a vertical dimension between the upper jaw plate and the lower jaw plate.
